# EUROPÄISCHE PATENTANMELDUNG

(11) **EP 4 101 885 A1**
(43) Veröffentlichungstag der Anmeldung: **14.12.2022**
(21) Anmeldenummer: 21178332.9
(22) Anmeldetag: 08.06.2021
(51) Int. Cl.: C08L 3/02, C09J 9/00, C09J 103/02

(54) **FORMSTABILE KLEBEMASSE ENTHALTEND ENZYMATISCH MODIFIZIERTE STÄRKE**

(71) Anmelder: Henkel AG & Co. KGaA, 40589 Düsseldorf (DE)
(72) Erfinder: Schroeder, Benjamin, 40223 Düsseldorf (DE); Hellwig, Nils, 47800 Krefeld (DE); Kaulisch, Anna, 40764 Langenfeld (DE); Zickuhr, Ivonne, 41352 Korschenbroich (DE)

(57) **Zusammenfassung**

Die vorliegende Erfindung betrifft eine formstabile Klebemasse enthaltend enzymatisch modifizierte Stärke sowie die Verwendung der Klebemasse als Klebestift.

## Beschreibung

Die vorliegende Erfindung betrifft eine formstabile Klebemasse enthaltend enzymatisch modifizierte Stärke sowie die Verwendung der Klebemasse als Klebestift.

Klebestifte sind allgemein als ein mit Klebstoff in halbfester Form gefüllter Zylinder bekannt, dessen Inhalt durch Drehen einer nach dem Schraubenprinzip funktionierenden Mechanik am Ende eines Stifts herausgedrückt und wieder hineingezogen werden kann. Der erste Klebestift wurde 1969 auf den Markt gebracht, wobei seitdem umfangreiche Bemühungen unternommen wurden die anfänglich verwendeten erdölbasierten Klebestoffe durch nachhaltigere Alternativen zu ersetzen.

DE 1811466 beschreibt einen Klebestift, bestehend aus einer formgebenden Gerüstsubstanz, die aus einem Gel von Alkali- beziehungsweisen Ammoniumsalzen aliphatischer Carbonsäuren mit 8 bis 36 Kohlenstoffatomen in Wasser und/oder wassermischbaren organischen Lösungsmitteln gebildet wird, und bekannten wasserlöslichen beziehungsweise wasserdispergierbaren Klebstoffen als klebende Komponente.

WO 03/029376 betrifft einen formstabilen, weich-abreibbaren Klebestift aus einer wässrigen Zubereitung eines synthetischen Polymeren und einem Seifengel als gerüstbildenden Bestandteil, wobei die wässrige Zubereitung des synthetischen Polymeren eine zumindest weitgehend lösungsmittelfreie wässrige Polyacrylat-Dispersion oder ein festes alkalisch lösliches Polyacrylat enthält, welche beide freie Säuregruppen aufweisen.

WO 2014/019001 offenbart einen Klebestift aus einer wässrigen Zubereitung eines Acrylsäureester-Copolymers als klebende Komponente und einem Seifengel als gerüstbildende Substanz, wobei als gelstrukturbildende Seife Natriumsalze von C₁₂- bis C₂₂-Fettsäuren, insbesondere C₁₄- bis C₁₈-Fettsäuren enthalten sind und wobei der Acrylsäureester einen Acrylsäuregehalt von 10-25% aufweist.

Der Nachteil der im Stand der Technik beschriebenen Klebestifte besteht darin, dass sie weiterhin von petrochemischen Bestandteilen abhängig sind. Ein weiterer Ansatz, Klebestifte auf Basis nachwachsender Rohstoffe zu realisieren, ist die Verwendung von Stärke.

DE 19908560 beschreibt einen formstabilen, weich abreibbaren Klebestift, bestehend aus einer wässrigen Zubereitung von Stärkeethern und Saccharose als klebende Komponente und einem Seifengel als formgebende Gerüststruktur.

EP 2455436 offenbart eine hoch homogene Klebstoffzusammensetzung umfassend enzymatisch verzweigte Stärke mit einem Viskositätsstabilitätsindex SI von kleiner oder gleich 1,3, bestimmt durch den Quotienten aus der Viskosität nach 14 Tagen und der Viskosität nach 2 Stunden nach Herstellung der Zusammensetzung.

WO 2012/110594 betrifft einen Klebestift, enthaltend eine wässrige Zubereitung mindestens einer Hydroxyalkylcarboxymethylstärke mit einer Viskosität kleiner 2.000.000 mPas, bestimmt als 40 Gew.-%ige wässrige Lösung mittels Brookfield-Viskositmeter RTV bei 20 °C, Spindel 7, 20 U/min, und Seife sowie dessen Herstellung und Verwendung zum flächigen Verbinden von Substraten, insbesondere zum Verbinden von Papier, Pappe, Holz und/oder Kunststoff.

WO 2014/200344 beschreibt eine wässrige Klebstoffzusammensetzung umfassend hochverzweigte Stärke (HBS), die durch Umsetzung einer Stärke oder eines Stärkederivats mit einem Glykogenverzweigenden Enzym (EC 2.4.1.18) gewonnen wird, und ein carboxylmethyl (CM)-Polysaccharid-Derivat.

Auch die im Stand der Technik verfügbaren Klebestifte auf Basis von Stärke weisen den Nachteil auf, dass sie weiterhin Bestandteile aufweisen, die auf fossile Ressourcen zurückgehen und gar nicht oder nur teilweise aus nachwachsenden, pflanzlichen Rohstoffen erhalten werden können. Daher besteht weiterhin der Bedarf nach nachhaltigen Zusammensetzungen, die als Klebestifte verwendet werden können. Es ist daher die Aufgabe der vorliegenden Erfindung, eine formstabile Klebemasse bereitzustellen, bei der die herkömmlicherweise verwendeten chemisch modifizierten Stärken durch alternativ aufgeschlossene Stärken ersetzt werden, wobei sicher zu stellen ist, dass derartige Klebemassen eine hohe Klebkraft und Formstabilität sowie eine gute Abriebfestigkeit aufweisen.

Es wurde überraschend gefunden, dass diese Aufgabe durch eine wasserbasierte, formstabile Klebemasse gelöst wird, wie sie in Anspruch 1 definiert ist. Bevorzugte Ausgestaltungen sind in den Unteransprüchen beschrieben.

Ein erster Gegenstand der vorliegenden Erfindung ist daher eine wasserbasierte, formstabile Klebemasse enthaltend, jeweils bezogen auf das Gesamtgewicht der Klebemasse,
a) mindestens 10 Gew.-% an aufgeschlossener und enzymatisch modifizierter Stärke mit einer dynamischen Viskosität von weniger als 500.000 mPas, gemessen nach Brookfield, erhältlich durch Modifizierung nativer Stärke mittels eines Glykogen verzweigenden Enzyms (EC 2.4.1.18);
b) mindestens 20 Gew.-% an Saccharose;
c) mindestens 3 Gew.-% an Gerüstsubstanz ausgewählt aus C₁₂- bis C₂₂-Fettsäuren und/oder deren Salzen,
wobei der Gesamtanteil an Stärken; insbesondere aufgeschlossener und enzymatisch modifizierter Stärken, und Saccharose unterhalb von 65 Gew.-% bezogen auf das Gesamtgewicht der Klebemasse liegt und das Gewichtsverhältnis an Stärken, insbesondere aufgeschlossener und enzymatisch modifizierter Stärken, zu Saccharose kleiner als 0,70 ist.

Die dynamische Viskosität der Stärke kann jeweils als 40 Gew.-%-ige Lösung in entionisiertem Wasser (κ <1 µScm⁻¹) bei einer Temperatur von 20 °C nach Brookfield bei einer Drehzahl von 20 U/min mit Spindel 7 bei einer dynamischen Viskosität oberhalb von 50.000 mPas, mit Spindel 6 bei einer dynamischen Viskosität bis 50.000 mPas und Spindel 4 bei einer dynamischen Viskosität unterhalb von 10.000 mPas mit einem Brookfield Viscometer DV2T extra gemessen werden.

Aufgeschlossene Stärke im Rahmen der vorliegenden Erfindung ist aus dem nativen Stärkekorn durch Verkleisterung erhältliche wasserlösliche Stärke. Die Verkleisterung ist ein irreversibler, meist thermisch induzierter Prozess, bei dem das Stärkekorn in Anwesenheit von Wasser zur Quellung gebracht wird und die Stärke in die wässrige Phase übergeht und eine polymere Lösung und/oder Dispersion gebildet wird. Derart aufgeschlossene Stärke kann chemisch modifiziert oder abgebaut und auch enzymatisch modifiziert, insbesondere umgelagert, werden. Im Zusammenhang mit der vorliegenden Erfindung gilt eine Stärke als hinreichend aufgeschlossen, wenn ihre dynamische Viskosität als 40 Gew.-%ige Lösung in entionisiertem Wasser bei 20°C gemessen nach Brookfield bei einer Drehzahl von 20 U/min mit Spindel 7 nach dem Verkleisterungsprozess kleiner als 500.000 mPas ist. Der Stärkeanteil der erfindungsgemäßen Klebemasse umfasst im Kontext der vorliegenden Erfindung jegliches Polysaccharid auf Basis von α-D-Glucose mit Amylose- und Amylopektin-Bestandteilen. Der Stärkeanteil schließt daher neben enzymatisch modifizierten aufgeschlossenen Stärkeanteilen auch chemisch modifizierte und/oder chemisch abgebaute aufgeschlossene Stärke mit ein, insofern diese als die zuvor genannten Polysaccharide vorliegen.

Um die in der erfindungsgemäßen Klebemasse verwendete Stärke zu erhalten, kann die Stärke aufgeschlossen und dann mit einem Glykogenverzweigungsenzym (E.C. 2.4.1.18) umgewandelt werden. Normale Stärke besteht aus zwei Bestandteilen, der nahezu linearen Amylose mit α-1,4 glykosidischen Bindungen und dem α-1,6 verzweigten Amylopektin. Verzweigende Enzyme sind Enzyme, die in der Lage sind, die in Amylopektin und Amylose vorhandenen α-1,4-Glykosidbindungen in α-1,6-Bindungen umzuwandeln und damit neue Verzweigungsstellen zu schaffen. Bei der Inkubation mit aufgeschlossener Stärke werden die Amylose und/oder lange Seitenketten des Amylopektins unter Bildung neuer α-1,6 glykosidischer Bindungen übertragen. Dies führt zu einer Verkürzung der durchschnittlichen Seitenkettenlänge und zu einer signifikanten Verringerung des Wechselwirkungsvermögens der verzweigten Moleküle. Die durch Verzweigungsenzyme modifizierte Stärke kombiniert eine Reihe funktioneller Eigenschaften wie niedrige Viskosität bei hohen Konzentrationen, keine Retrogradation und eine transparente Lösung mit weiteren funktionellen Eigenschaften wie einer ausreichend hohen Nassklebrigkeit.

Dementsprechend sieht die Erfindung die Verwendung einer aufgeschlossenen und enzymatisch modifizierten Stärke mit einer dynamischen Viskosität von weniger als 500.000 mPas gemessen nach Brookfield vor, die durch Behandlung von Stärke oder Stärkederivaten mit Glykogenverzweigungsenzym (EC 2.4.1.18) erhalten wird. Der Grad der Verzweigung kann variieren und ist abhängig von der beabsichtigten Anwendung. Typischerweise hat die aufgeschlossene und enzymatisch modifizierte Stärke einen molekularen Verzweigungsgrad von mindestens 4 %, der daher bevorzugt ist. In einer bevorzugten Ausführungsform hat die aufgeschlossene und enzymatisch modifizierte Stärke als Bestandteil der erfindungsgemäßen Klebemasse einen molekularen Verzweigungsgrad von mindestens 5,0 %. Dies liefert ein hochstabiles Produkt. Vorzugsweise beträgt der Verzweigungsgrad in diesem Zusammenhang mindestens 5,5 %, und liegt zum Beispiel im Bereich von etwa 5,5 bis etwa 6,5 %. Der Grad der molekularen Verzweigung, wie er hier verwendet wird, bezieht sich auf die relative Menge an α-1,6-glykosidischen Bindungen über die Gesamtheit der α-1,6- und α-1,4-glykosidischen Bindungen ((α -1,6 /(α- 1,6 + α-1,4) *100%) und kann durch in der Technik bekannte Methoden bestimmt werden. Typischerweise und daher bevorzugt übersteigt der Grad der Verzweigung im Kontext der vorliegenden Erfindung nicht 8,0%, ganz besonders bevorzugt nicht 7,5%.

Vorzugsweise wird die Stärke oder das Stärkederivat zunächst aufgeschlossen, bevor sie/es mit dem Verzweigungsenzym in Kontakt gebracht wird. Die Stärkeverkleisterung wie oben bereits erwähnt ist ein Prozess, bei dem die intermolekularen Bindungen der Stärkemoleküle in Gegenwart von Wasser und Wärme aufgebrochen werden, so dass die Wasserstoffbrückenbindungsstellen (der Hydroxylwasserstoff und der Sauerstoff) mehr Wasser aufnehmen können. Dadurch wird das Stärkekorn irreversibel aufgelöst. Das Eindringen von Wasser erhöht die Zufälligkeit in der allgemeinen Granulatstruktur und verringert die Anzahl und Größe der kristallinen Bereiche. Die verkleisterte Stärke kann durch Zugabe von Säure oder Base auf den gewünschten pH-Wert gebracht werden. Nachdem die gewünschte Temperatur erreicht ist, wird das Verzweigungsenzym zugegeben und die Lösung für eine gewünschte Zeit auf der gewünschten Temperatur gehalten. Alternativ kann das Verzweigungsenzym zu einer Stärkesuspension bei Raumtemperatur zugegeben werden und unter Rühren kann die Aufschlämmung auf die gewünschte Temperatur erhitzt und für die gewünschte Zeit auf dieser Temperatur gehalten werden.

Das Verzweigungsenzym kann aus jeder geeigneten mikrobiellen Quelle stammen, vorzugsweise ist es ein thermostabiles Glykogenverzweigungsenzym, das aus einem mesophilen oder thermophilen Organismus gewonnen wird. Vorzugsweise ist das Glykogenverzweigungsenzym *Aquifex aeolicus, Anaerobranca gottschalkii oder Rhodothermus obamensis.*

Im Rahmen der vorliegenden Erfindung wurde überraschend gefunden, dass sich aus Zusammensetzungen wie sie herkömmlicherweise für Klebestifte beschrieben werden bei Verwendung von aufgeschlossener und modifizierter Stärke keine formstabilen Klebemassen erhalten lassen, so dass eine Begrenzung des Gesamtanteils an Stärken und Saccharose angezeigt ist. So hat sich im Rahmen der vorliegenden Erfindung herausgestellt, dass für die Erzielung von besonders vorteilhaften Eigenschaften, insbesondere hinsichtlich Formstabilität und Abriebfestigkeit, der Gesamtanteil an Stärken in der erfindungsgemäßen Klebemasse in einem streng definierten Rahmen gehalten werden sollte. Daher ist eine Ausführungsform bevorzugt, in der der Gesamtanteil an Stärken, insbesondere aufgeschlossener und enzymatisch modifizierter Stärken, und Saccharose unterhalb von 60 Gew.-%, jedoch vorzugsweise oberhalb von 40 Gew.-%, besonders bevorzugt oberhalb von 45 Gew.-%, jeweils bezogen auf das Gesamtgewicht der Klebemasse liegt.

Ein Klebestift zeichnet sich besonders durch eine Kombination der Eigenschaften Abriebfestigkeit, Formstabilität und Druckfestigkeit aus, die neben einer ausreichenden Klebkraft aufeinander abgestimmt sein müssen. Hierzu wurde überraschend gefunden, dass die gewünschte Kombination an Eigenschaften insbesondere dann erreicht werden kann, wenn die Klebemasse Stärke und Saccharose in einem Gewichtsverhältnis von kleiner 0,70 aufweist. Durch Anpassung dieses Gewichtsverhältnisses konnten die Eigenschaften der erfindungsgemäßen Klebemasse weiter verbessert werden, wobei eine Ausführungsform bevorzugt ist, in der das Gewichtsverhältnis von Stärke, insbesondere aufgeschlossener und enzymatisch modifizierter Stärke, zu Saccharose kleiner als 0,60 und vorzugsweise größer als 0,30 ist. Bei einem Gewichtsverhältnis von größer 0,70 konnte die benötigte Druck- und Abriebsfestigkeit der Klebemasse nicht erreicht werden, wobei unter Druckfestigkeit im Rahmen der vorliegenden Erfindung die beim Zusammenbrechen der Klebemasse in Stiftform unter Druckbelastung parallel zur Längsachse gemessene Höchstlast zu verstehen ist. Bei einem Gewichtverhältnis von unter 0,30 wurde eine Abnahme der Klebekraft beobachtet.

Die in der erfindungsgemäßen Klebemasse enthaltene Stärke zeichnet sich durch eine dynamische Viskosität von weniger als 500.000 mPas aus. In einer bevorzugten Ausführungsform liegt die dynamische Viskosität der aufgeschlossenen und enzymatisch modifizierten Stärke unterhalb von 200.000 mPas, vorzugsweise unterhalb von 100.000 mPas, besonders bevorzugt unterhalb von 50.000 mPas, beträgt jedoch vorzugsweise mindestens 10.000 mPas, wobei die dynamische Viskosität wie oben beschrieben bestimmt wurde. Bei einer dynamischen Viskosität unterhalb von 10.000 mPas wurde neben der bei niedrigen Viskositäten erforderlichen längeren Prozessführung bei erhöhter Temperatur auch in einigen Fällen eine ungewollte Farbveränderung der Klebemasse beobachtet, so dass eine dynamische Viskosität von mindestens 10.000 mPas für die meisten Anwendungen bevorzugt ist. Dagegen wurde überraschend gefunden, dass bei einer dynamischen Viskosität unterhalb von 200.000 mPas die Gelbildung und Rekristallisation in der Klebemasse unterdrückt und eine homogene und lagerstabile Klebemasse erhalten wird. Durch weitere Absenkung der dynamischen Viskosität auf unterhalb von 100.000 mPas, bevorzugt unterhalb von 50.000 mPas konnte die Pump- und Abfüllbarkeit der Klebemasse im flüssigen und erhitzten Zustand deutlich verbessert werden. Der Viskositätsbereich von 10.000 bis 50.000 mPas wurde als guter Kompromiss zwischen Prozessdauer und Energiebedarf und der Bereitstellung hinreichend abgebauter Stärken für ausreichende Klebekraft und Farbstabilität der erfindungsgemäßen Klebemasse identifiziert. Des Weiteren ist in diesem Viskositätsbereich gewährleistet, dass bei der Herstellung zylinderförmiger Klebemassen, wie sie für die Bereitstellung als Klebestifte notwendig sind, ein geringerer Ausschuss durch Fehlbefüllungen der Stifthülsen und insgesamt weniger Ausfallzeiten bei der Abfüllung realisiert werden.

Als Ausgangsstärke für die aufgeschlossene und enzymatisch modifizierte Stärke, die in der erfindungsgemäßen Klebemasse verwendet wird, wird vorzugsweise eine Stärke natürlichen Ursprungs eingesetzt. Diese natürliche Stärke kann jede herkömmliche Knollen-, Getreide- oder Leguminose-Stärke sein, z.B. Erbsenstärke, Maisstärke, inkl. Wachsmaisstärke, Kartoffelstärke, inkl. Wachskartoffelstärke, Amaranthstärke, Reisstärke, inkl. Wachsreisstärke, Weizenstärke, inkl. Wachsweizenstärke, Gerstenstärke, inkl. Wachsgerstenstärke, Tapiokastärke oder Sagostärke. In einer bevorzugten Ausführungsform ist die aufgeschlossene und enzymatisch modifizierte Stärke erhältlich aus Getreide, Knollen, Wurzeln und/oder Leguminosen, vorzugsweise erhältlich aus Knollen, besonders bevorzugt aus Süßkartoffeln und/oder Kartoffeln, insbesondere bevorzugt aus Kartoffeln.

Stärken natürlichen Ursprungs haben in der Regel einen Amylosegehalt von 20 % bis 40 %, abhängig von der Pflanzenart, aus der sie gewonnen werden. Dieser Amylosegehalt ist auch im Rahmen der vorliegenden Erfindung bevorzugt. Es gibt aber auch amylopektinreiche Stärken, welche einen deutlich erhöhten Amylopektingehalt aufweisen, bzw. Produkte, welche einen erhöhten Amylosegehalt enthalten. Stärken mit hohem Amylopektingehalt können ebenfalls im Rahmen der vorliegenden Erfindung für erfindungsgemäße Klebemassen aufgeschlossen und enzymatisch abgebaut werden, dabei sind Stärken mit Amylopektingehalten auch oberhalb von 80 % einsetzbar. Amylopektin ist bereits eine verzweigte Stärke und die erfindungsgemäße enzymatische Modifizierung mit einem Verzweigungsenzym kann diese bereits nativ hohe Verzweigung weiter erhöhen.

Da Stärke naturgemäß heterogen ist, können auch bei erfindungsgemäß hergestellten enzymatisch verzweigten Stärken für die Klebstoffzusammensetzung neben den Stärkemolekülen im erfindungsgemäß bevorzugten Bereich mit den oben genannten Eigenschaften auch andere Stärkemoleküle vorkommen. In bevorzugten Ausführungsformen ist der Anteil an enzymatisch modifizierter Stärke bezogen auf den Gesamtstärkeanteil, mindestens 65 Gew.-%, vorzugsweise mindestens 80 Gew.-%, besonders bevorzugt mindestens 90 Gew.-%.

Die erfindungsgemäße Klebemasse zeichnet sich dadurch aus, dass sie hauptsächlich aus natürlichen Rohstoffen gewonnen wird. Daher ist eine Ausführungsform bevorzugt, bei der der Anteil aufgeschlossener und chemisch modifizierter Stärken, insbesondere Hydroxyalkylcarboxymethyl-modifizierter Stärken, bezogen auf den Gesamtstärkeanteil vorzugsweise kleiner als 20 Gew.-%, besonders bevorzugt kleiner als 10 Gew.-%, ganz besonders bevorzugt kleiner als 5 Gew.-% ist. Bei den chemisch modifizierten Stärken handelt es sich insbesondere um solche, die als Produkte der Kondensation zwischen den Hydroxygruppen der Anhydroglucose-Einheiten (AGE) von Stärkemolekülen und alkoholischen Hydroxygruppen anderer Verbindungen anfallen. In einer besonderen Ausführungsform können in der erfindungsgemäßen Klebemasse jedoch mindestens 0,1 Gew.-%, vorzugsweise mindestens 1,0 Gew.-%, jedoch vorzugsweise weniger als 5,0 Gew.-%, besonders bevorzugt weniger als 3,0 Gew.-% Hydroxyalkylcarboxymethyl-modifizierter Stärken jeweils bezogen auf das Gesamtgewicht der Klebemasse zur Einstellung der rheologischen Eigenschaften bei der Flüssigabfüllung der erfindungsgemäßen Klebemassen in der industriellen Fertigung von Klebestiften vorteilhaft sein.

Die Gerüststruktur der erfindungsgemäßen Klebemasse wird aus C₁₂- bis C₂₂-Fettsäuren und/oder deren Salze gebildet. In einer bevorzugten Ausführungsform sind in der erfindungsgemäßen Klebemasse mindestens 4 Gew.-%, vorzugsweise mindestens 5 Gew.-%, jedoch vorzugsweise nicht mehr als 10 Gew.-% an Gerüstsubstanzen ausgewählt aus C₁₂- bis C₂₂-Fettsäuren und/oder deren Salze enthalten, jeweils bezogen auf das Gesamtgewicht der Klebemasse. Vorzugsweise ist die Gerüststruktur ausgewählt aus C₁₄- bis C₁₈-Fettsäuren und/oder deren Salze. Besonders bevorzugt handelt es sich bei den Salzen der Gerüststruktur um die Natrium- oder Kalium- oder Kalziumsalze der entsprechenden Fettsäuren oder Mischungen dieser Salze.

Die erfindungsgemäße Klebemasse ist wasserbasiert. Unter einer wasserbasierten Klebemasse im Rahmen der vorliegenden Erfindung ist eine Klebemasse zu verstehen, die zumindest 5 Gew.-%, bezogen auf das Gesamtgewicht der Klebemasse, an Wasser enthält. In einer bevorzugten Ausführungsform enthält die erfindungsgemäße Klebemasse mindestens 10 Gew.-%, vorzugweise mindestens 15 Gew.-%, besonders bevorzugt mindestes 20 Gew.-%, insbesondere bevorzugt mindestens 25 Gew.-% an Wasser bezogen auf das Gesamtgewicht der Klebemasse.

Die erfindungsgemäße Klebemasse weist vorzugsweise einen pH-Wert von zumindest 9,0 besonders bevorzugt von zumindest 9,5, jedoch vorzugsweise von nicht höher als 11,0 auf. Der pH-Wert der Klebemasse kann mittels üblicher alkalisch reagierender Substanzen wie Natriumhydroxid eingestellt werden und wird als Eigenschaft der Klebemasse unmittelbar in der verflüssigten Masse bei 80°C mittels pH-sensitiver Glaselektrode nach Kalibration mit Standardpuffern der pH-Wert ermittelt.

In einer besonders bevorzugten Ausführungsform enthält die erfindungsgemäße Klebemasse folgende Bestandteile:
a) 10-25 Gew.-% an aufgeschlossener und enzymatisch modifizierter Stärke mit einer dynamischen Viskosität von weniger als 500.000 mPas gemessen nach Brookfield erhältlich durch Modifizierung nativer Stärke mittels eines Glykogen verzweigenden Enzyms (EC 2.4.1.18);
b) 20-45 Gew.-% an Saccharose;
c) 3-10 Gew.-% an Gerüstsubstanz ausgewählt aus C₁₂- bis C₂₂-Fettsäuren und/oder deren Salzen;
d) mindestens 20 Gew.-% an Wasser;
e) weniger als 5 Gew.-% an aufgeschlossener und chemisch modifizierter Stärke; und gegebenenfalls
f1) mindestens 0,1 Gew.-%, bevorzugt mindestens 1,0 Gew.-%, jedoch vorzugsweise weniger als 3,0 Gew.-% an Hydroxyalkylcarboxymethyl-modifizierter Stärke und vorzugsweise weniger als 3 Gew.-%, besonders bevorzugt weniger als 1 Gew.-%, an solchen aufgeschlossenen und chemisch modifizierten Stärken, die keine Hydroxyalkylcarboxymethyl-modifizierte Stärke darstellen; oder
f2) weniger als 3 Gew.-%, vorzugsweise weniger als 1 Gew.-% an aufgeschlossenen und chemisch modifizierten Stärken.
wobei sich die Angaben in Gew.-% jeweils auf das Gesamtgewicht der Klebemasse beziehen.

Die erfindungsgemäße Klebemasse ist insbesondere für die Verwendung als Klebestift geeignet. Daher ist ein weiterer Gegenstand der vorliegenden Erfindung ein Klebestift gebildet aus der erfindungsgemäßen Klebemasse.

Ein weiterer Gegenstand der vorliegenden Erfindung ist die Verwendung des erfindungsgemäßen Klebestifts zum flächigen Verbinden von Substraten, insbesondere zum Verbinden von Papier, Pappe und/oder Kunststoff miteinander.

Die vorliegende Erfindung wird anhand der folgenden Beispiele näher erläutert, wobei diese keinesfalls als Einschränkung des Erfindungsgedanken zu verstehen sind.

Tabelle 1 fasst beispielhafte Rezepturen zusammen, wobei sich die Angaben als Gew.-% auf das Gesamtgewicht der Zusammensetzung beziehen. Die erhaltenen Klebemassen wurden vermessen und die Ergebnisse in Tabelle 1 protokolliert.

**Tabelle 1:**

| | **Vergleichsbeispiel** | **Beispiel 1** | **Beispiel 2** | **Beispiel 3** | **Beispiel 4** |
|---|---|---|---|---|---|
| enzymatisch modifizierte Stärke | 20 | 18 | 16 | 16 | 14 |
| Viskosität enzymatisch modifizierte Stärke (Lösung 40%) | 15000-25000 mPas | | | | |
| Fettsäure C₁₄ | 1,9 | 1,9 | 1,9 | 1,9 | 1,9 |
| Fettsäure C₁₆ | 3,72 | 3,72 | 3,72 | 3,72 | 3,72 |
| Saccharose | 25 | 30 | 35 | 40 | 40 |
| Natriumhydroxid (Lösung 50%) | 0,2-1,0 | 0,2-1,1 | 0,2-1,2 | 0,2-1,3 | 0,2-1,4 |
| Wasser | Rest | Rest | Rest | Rest | Rest |
| Gesamtanteil Stärke und Saccharose | 45 | 48 | 51 | 56 | 54 |
| Gewichtsverhältnis Stärke : Saccharose | 0,80 | 0,60 | 0,46 | 0,40 | 0,35 |
| **Abriebfestigkeit** | nicht akzeptabel | befriedigend | gut | gut | gut |
| **Druckfestigkeit** / N | 33 | 65 | 90 | 101 | 96 |
| **Klebkraft auf Papier** | N/A | sehr gut (Papierriss) | sehr gut (Papierriss) | sehr gut (Papierriss) | sehr gut (Papierriss) |

Zur Messung der Druckfestigkeit dient das Prüfgerät 10 kN Pro Line der Fa. Zwick Roell.

Der unmittelbar oberhalb des Kolbens abgeschnittene Klebstoff mit einer Länge von 30 mm wird zwischen zwei Haltstücke eingesteckt; hierbei handelt es sich um Scheiben aus Edelstahl mit einer Dicke von ca. 10 mm, die eine an den jeweiligen Stiftdurchmesser angepasste kreisrunde Vertiefung von 3 mm aufweisen. Der mit den Haltestücken versehene Stift wird zentrisch auf den Prüftisch des Druckfestigkeitstester gestellt. Die Höhe des Messkopfes wird der Höhe des Prüfteils angepasst. Darauf wird der Messkopf mit einer Vorschubgeschwindigkeit von 120 mm/min gegen den zu prüfenden Stift gefahren. Die höchste erreichte Druckkraft ergibt die Druckfestigkeit in N. Bei einem Durchmesser von 21 mm sollte die Druckfestigkeit eines Klebestifts zwischen 60 und 120 N betragen.

Wie aus den bereit gestellten Daten ersichtlich, zeichnet sich die erfindungsgemäße Klebemasse insbesondere durch eine Kombination von hoher Druckfestigkeit, guter Abriebfestigkeit und hoher Klebkraft aus.

## Patentansprüche

1. Wasserbasierte, formstabile Klebemasse, enthaltend jeweils bezogen auf das Gesamtgewicht der Klebemasse,
a) mindestens 10 Gew.-% an aufgeschlossener und enzymatisch modifizierter Stärke mit einer dynamischen Viskosität von weniger als 500.000 mPas gemessen nach Brookfield erhältlich durch Modifizierung nativer Stärke mittels eines Glykogen verzweigenden Enzyms (EC 2.4.1.18);
b) mindestens 20 Gew.-% an Saccharose;
c) mindestens 3 Gew.-% an Gerüstsubstanz ausgewählt aus C₁₂- bis C₂₂-Fettsäuren und/oder deren Salzen,
wobei der Gesamtanteil an Stärken, insbesondere aufgeschlossener und enzymatisch modifizierter Stärken, und Saccharose unterhalb von 65 Gew.-% bezogen auf das Gesamtgewicht der Klebemasse liegt und das Gewichtsverhältnis an Stärken, insbesondere aufgeschlossener und enzymatisch modifizierter Stärken, zu Saccharose kleiner als 0,70 ist.

2. Klebemasse nach Anspruch 1, **dadurch gekennzeichnet, dass** der Gesamtanteil an Stärken, insbesondere aufgeschlossener und enzymatisch modifizierter Stärken, und Saccharose unterhalb von 60 Gew.-%, jedoch vorzugsweise oberhalb von 40 Gew.-%, besonders bevorzugt oberhalb von 45 Gew.-% bezogen auf das Gesamtgewicht der Klebemasse liegt.

3. Klebemasse nach einem oder beiden der vorherigen Ansprüche, **dadurch gekennzeichnet, dass** das Gewichtsverhältnis von Stärke, insbesondere aufgeschlossener und enzymatisch modifizierter Stärke, zu Saccharose kleiner als 0,60 und vorzugsweise größer als 0,30 ist.

4. Klebemasse nach einem oder mehreren der vorherigen Ansprüche, **dadurch gekennzeichnet, dass** die dynamische Viskosität der aufgeschlossenen und enzymatisch modifizierten Stärke unterhalb von 200.000 mPas, vorzugsweise unterhalb von 100.000 mPas, besonders bevorzugt unterhalb von 50.000 mPas liegt, jedoch vorzugsweise mindestens 10.000 mPas beträgt.

5. Klebemasse nach einem oder mehreren der vorherigen Ansprüche, **dadurch gekennzeichnet, dass** die aufgeschlossene und enzymatisch modifizierte Stärke erhältlich ist aus Getreide, Knollen, Wurzeln und/oder Leguminosen, vorzugsweise erhältlich ist aus Knollen, besonders bevorzugt aus Süßkartoffeln und/oder Kartoffeln, insbesondere bevorzugt aus Kartoffeln.

6. Klebemasse nach einem oder mehreren der vorherigen Ansprüche, **dadurch gekennzeichnet, dass** der Anteil an enzymatisch aufgeschlossener Stärken bezogen auf den Gesamtstärkeanteil mindestens 65 Gew.-% beträgt, vorzugsweise mindestens 80 Gew.-%, besonders bevorzugt mindestens 90 Gew.-% beträgt.

7. Klebemasse nach einem oder mehreren der vorherigen Ansprüche, **dadurch gekennzeichnet, dass** der Anteil aufgeschlossener und chemisch modifizierter Stärken, insbesondere Hydroxyalkylcarboxymethyl-modifizierter Stärken, bezogen auf den Gesamtstärkeanteil vorzugsweise kleiner als 20 Gew.-%, besonders bevorzugt kleiner als 10 Gew.-%, ganz besonders bevorzugt kleiner als 5 Gew.-% ist.

8. Klebemasse nach einem oder mehreren der vorherigen Ansprüche, **dadurch gekennzeichnet, dass** mindestens 4 Gew.-%, vorzugsweise mindestens 5 Gew.-%, jedoch vorzugsweise nicht mehr als 10 Gew.-% an Gerüstsubstanzen ausgewählt aus C₁₂- bis C₂₂-Fettsäuren sowie deren Salze jeweils bezogen auf das Gesamtgewicht der Klebemasse enthalten sind.

9. Klebemasse nach einem oder mehreren der vorherigen Ansprüche, **dadurch gekennzeichnet, dass** die Salze der C₁₂- bis C₂₂-Fettsäuren ausgewählt sind aus Natrium-, Kalium- und/oder Kalzium-Salzen.

10. Klebemasse nach einem oder mehreren der vorherigen Ansprüche, **dadurch gekennzeichnet, dass** mindestens 10 Gew.-%, vorzugweise mindestens 15 Gew.-%, besonders bevorzugt mindestes 20 Gew.-%, insbesondere bevorzugt mindestens 25 Gew.-% an Wasser bezogen auf das Gesamtgewicht der Klebemasse enthalten sind.

11. Klebemasse nach einem oder mehreren der vorherigen Ansprüche, **dadurch gekennzeichnet, dass** die Klebemasse einen pH-Wert von zumindest 9,0, vorzugsweise von zumindest 9,5, jedoch vorzugsweise von nicht höher als 11,0 aufweist.

12. Klebemasse nach einem oder mehreren der vorherigen Ansprüche enthaltend
a) 10-25 Gew.-% an aufgeschlossener und enzymatisch modifizierter Stärke mit einer dynamischen Viskosität von weniger als 500.000 mPas gemessen nach Brookfield erhältlich durch Modifizierung nativer Stärke mittels eines Glykogen verzweigenden Enzyms (EC 2.4.1.18);
b) 20-45 Gew.-% an Saccharose;
c) 3-10 Gew.-% an Gerüstsubstanz ausgewählt aus C₁₂- bis C₂₂-Fettsäuren und/oder deren Salzen;
d) mindestens 20 Gew.-% an Wasser; und
e) weniger als 5 Gew.-% an aufgeschlossener und chemisch modifizierter Stärke; und gegebenenfalls
f1) mindestens 0,1 Gew.-%, bevorzugt mindestens 1,0 Gew.-%, jedoch vorzugsweise weniger als 3,0 Gew.-% an Hydroxyalkylcarboxymethyl-modifizierter Stärke und vorzugsweise weniger als 3 Gew.-%, besonders bevorzugt weniger als 1 Gew.-%, an solchen aufgeschlossenen und chemisch modifizierten Stärken, die keine Hydroxyalkylcarboxymethyl-modifizierte Stärke darstellen; oder
f2) weniger als 3 Gew.-%, vorzugsweise weniger als 1 Gew.-% an aufgeschlossenen und chemisch modifizierten Stärken,
wobei sich die Angaben in Gew.-% jeweils auf das Gesamtgewicht der Klebemasse beziehen.

13. Klebestift gebildet aus einer Klebemasse gemäß wenigstens einem der Ansprüche 1 bis 12.

14. Verwendung eines Klebestifts gemäß Anspruch 13 zum flächigen Verbinden von Substraten, insbesondere zum Verbinden von Papier, Pappe und/oder Kunststoff miteinander.
